# EUROPEAN PATENT SPECIFICATION

(11) **EP 3 929 473 B1**
(45) Date of publication and mention of the grant of the patent: **06.08.2025**
(21) Application number: 20182079.2
(22) Date of filing: 24.06.2020
(51) Int. Cl.: F16K 1/52, F16K 35/00, F16K 35/02, F16K 35/06, F24D 19/10

(54) **A CONTROL VALVE ASSEMBLY, LOCKING MEMBER FOR THE CONTROL VALVE ASSEMBLY AND METHOD OF INSTALLATION**
STEUERVENTILANORDNUNG, VERRIEGELUNGSELEMENT FÜR DIE STEUERVENTILANORDNUNG UND INSTALLATIONSVERFAHREN
ENSEMBLE VANNE DE COMMANDE, ÉLÉMENT DE VERROUILLAGE DE L'ENSEMBLE VANNE DE COMMANDE ET PROCÉDÉ D'INSTALLATION

(43) Date of publication of application: 29.12.2021
(73) Proprietor: Honeywell International Inc., Morris Plains NJ 07950 (US)
(72) Inventor: SUCHY, Jan, Morris Plains, New Jersey 07950 (US)
(74) Representative: Haseltine Lake Kempner LLP

(56) References cited:
- EP-A1- 3 193 058
- EP-A2- 3 067 601
- FR-A1- 2 539 202
- US-A1- 2016 246 306
- US-B2- 10 379 549

## Description

### FIELD OF THE INVENTION

The present disclosure relates to a control valve assembly, locking member for the control valve assembly and method of installation, and particularly, although not exclusively, relates to a locking member that selectively covers a manual adjuster of the control valve assembly.

### BACKGROUND OF THE INVENTION

When conventional two-way valves in multi-zone, heating and/or cooling systems open or close, a pressure flow characteristic of a pump in the system causes an immediate head pressure change to all other valves in the system resulting in overflow or underflow. As a result, pressure independent control valves have been developed to maintain the required flow rate independent of the pressure. An example of such a Pressure Independent Control Valve (PICV) is disclosed in US 10,379,549 B2.

Such PICVs typically comprise an actuator adjuster for an actuator to vary the flow rate through the valve, e.g. when instructed by a controller in communication with the actuator. In addition, PICVs may comprise a manual adjuster that allows a technician during installation (or subsequently) to pre-set a maximum flow rate through the valve. However, adjustment of the manual adjuster after installation by an unqualified user is undesirable, because it interferes with the desired maximum flow rate through the valve which can affect the heating or cooling provided by one or more branches of the heating or cooling system. Nonetheless, it may be desirable for a qualified technician to be able to make adjustments to the maximum flow rate through the valve after installation and without necessarily having to remove the actuator.

EP3193058A1 discloses a reversible valve that can be adjusted in terms of flow through the valve and the valve comprises a pre-setting element that can be adjusted to change the maximum flow through the valve. FR2539202A1 discloses a fluid flow valve having a pre-setting member and means inhibiting rotation of a rotatable adjustment member for setting the angular position of the flow pre-setting member.

### SUMMARY OF THE INVENTION

According to a first specific aspect, there is provided a control valve assembly comprising:
a control valve, the control valve comprising:
   a manual adjuster configured to allow a user to pre-set a flow value limit for the control valve; and
   an actuator adjuster configured to allow an actuator to interface with the control valve and
adjust the flow value;
wherein the control valve assembly further comprises:
a locking member configured to selectively restrict user access to the manual adjuster when in a locked position wherein the locking member is slidable, e.g. linearly, between an unlocked position and the locked position, adjustment of the manual adjuster being permitted in the unlocked position,
wherein the locking member comprises at least one tab and the manual adjuster comprises at least one recess corresponding to the at least one tab of the locking member, such that when the locking member is inverted from the locked position the locking member is useable as a tool for adjusting the manual adjuster with the at least one tab of the locking member engaging the corresponding at least one recess of the manual adjuster.

The locking member may selectively cover the manual adjuster. The manual adjuster may comprise a dial, e.g. which may rotate to pre-set the flow value limit. The locking member may comprise a ring that selectively covers the dial.

The locking member may lock the manual adjuster by restricting user access to the manual adjuster. The locking member may additionally lock the manual adjuster as well as restricting access. By way of example, the manual adjuster may comprise a plurality of teeth and the locking member may comprise a corresponding plurality of teeth configured to lockingly engage the plurality of teeth of the manual adjuster.

The locking member may be located between the manual adjuster and the actuator adjuster. The locking member may be configured such that the locking member may not be removed when the actuator is in place. The at least one tab may extend radially inward from a ring of the locking member. The at least one tab may be configured, e.g. sized, to prevent the locking member from being removed when the actuator is installed.

Adjustment of the manual adjuster may be permitted in the unlocked position. The locking member may be slidable between the unlocked position and the locked position when the actuator is connected to the control valve.

The locking member may be rotatably coupleable to the control valve by virtue of a hinge assembly. The hinge assembly may permit the locking member to rotate between first and second orientations, e.g. angles, relative to the control valve. The hinge assembly may be configured to permit the locking member to slide, e.g. linearly, between the unlocked position and the locked position, e.g. when the locking member is in the first orientation.

The locking member may be in a further unlocked position when the locking member is in the second orientation. The locking member may only move from the unlocked position to the further unlocked position when the actuator is disconnected from the control valve.

The locking member may be detachable from the control valve. The hinge assembly may be configured such that disassembly of the hinge assembly may be permitted. Disassembly of the hinge assembly may be permitted when the locking member is in the second orientation.

The locking member may comprise a first hinge portion and the control valve may comprise a second hinge portion. The first and second hinge portions may together form the hinge assembly. The first and second hinge portions may form an interference fit.

One of the first and second hinge portions may comprise a slot. The other of the first and second hinge portions may comprise at least one pin configured to linearly slide and rotate in the slot. The slot and pin may each comprise abutment surfaces that limit the travel (e.g. linear movement) of the pin in the slot.

At least one of the first and second hinge portions may comprise a resiliently deformable portion such that the first and second hinge portions may form a snap fit assembly. Both of the first and second hinge portions may comprise such a resiliently deformable portion. For example, a resiliently deformable portion may be provided at each end of the slot. At least one of the first and second hinge portions may comprise a pair of such resiliently deformable portions.

At least one of the first and second hinge portions may comprise at least one angled surface. The angled surface may act on and cause the resiliently deformable portion to deform as the first and second hinge portions are snapped together.

The locking member may comprise a first engaging portion. The control valve may comprise a second engaging portion. The first and second engaging portions may be configured to selectively engage one another, e.g. in the unlocked and locked positions. The first and second engaging portions may be provided away from the hinge assembly, e.g. opposite the hinge assembly.

The first and second engaging portions may slide with respect to each other as the locking member moves between the unlocked position and the locked position, e.g. when the locking member is in the first orientation. The first and second engaging portions may form an interference fit.

At least one of the first and second engaging portions may comprise at least one stop that may limit relative movement of the first and second engaging portions. For example, the second engaging portion may comprise at least one such stop and the first engaging portion may ride over the at least one stop as the locking member moves between the unlocked and locked positions.

The first engaging portion may comprises a locking feature that allows the locking member to be locked to the control valve. The second engaging portion may comprise a corresponding locking feature that may permit the first and second engaging portions to be locked together.

The locking member may comprise at least one finger hold to assist in rotating the locking member relative to the control valve. The first hinge portion of the locking member may provide a finger hold. The first engaging portion of the locking member may provide a finger hold.

The control valve may be a pressure independent control valve. The control valve assembly may further comprise the actuator.

According to a second specific aspect, there is provided a use of a locking member for a control valve to selectively restrict user access and as a tool for adjusting a manual adjuster of the control valve, the control valve further comprising an actuator flow adjuster,
wherein the locking member is configured to selectively restrict user access to the manual adjuster when in a locked position, the locking member being slidable between an unlocked position and the locked position, adjustment of the manual adjuster being permitted in the unlocked position,
wherein the locking member comprises at least one tab corresponding to and configured to engage at least one recess of the manual adjuster, such that when the locking member is inverted from the locked position the locking member is useable as a tool for adjusting the manual adjuster with the at least one tab of the locking member engaging the corresponding at least one recess of the manual adjuster.

Features described above in respect of the first aspect may also apply to the second aspect.

According to a third specific aspect, there is provided a method of installing or commissioning a control valve assembly, the control valve assembly comprising:
a control valve, the control valve comprising:
   a manual adjuster configured to allow a user to pre-set a flow value limit for the control valve; and
   an actuator adjuster configured to allow an actuator to interface with the control valve and adjust the flow value; and
a locking member configured to selectively restrict user access to the manual adjuster when in a locked position, wherein the locking member is slidable between an unlocked position and the locked position, adjustment of the manual adjuster being permitted in the unlocked position, and wherein the locking member comprises at least one tab and the manual adjuster comprises at least one recess corresponding to the at least one tab of the locking member,
wherein the method comprises:
adjusting the manual adjuster by inverting the locking member from the locked position and using the locking member as a tool to adjust the manual adjuster with the at least one tab of the locking member engaging the corresponding at least one recess of the manual adjuster; and
installing the locking member to the locked position to restrict user access to the manual adjuster.

Features described above in respect of the first aspect may also apply to the third aspect.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Figure 1 is a side view of a control valve assembly according to an example of the present disclosure with an actuator installed and a locking member in a locked position;
Figure 2 is a side view of the control valve assembly according to an example of the present disclosure without the actuator and with the locking member in the locked position;
Figure 3 is a side view of the control valve assembly according to an example of the present disclosure without the actuator and with the locking member in an unlocked position;
Figure 4 is a side view of the control valve assembly according to an example of the present disclosure without the actuator and with the locking member in a further unlocked position;
Figure 5 is a view depicting the disassembly of the locking member from a control valve of the control valve assembly according to an example of the present disclosure;
Figure 6 is a perspective view of the locking member according to an example of the present disclosure;
Figure 7 is an end view of the locking member according to an example of the present disclosure;
Figure 8 is a partial perspective view of the control valve according to an example of the present disclosure;
Figures 9A, 9B and 9C (collectively Figure 9) are sectional views of a hinge of the control valve assembly according to an example of the present disclosure with Figure 9A showing the locking member prior to engagement of the hinge; Figure 9B showing the locking member in the unlocked position; and Figure 9A showing the locking member in the locked position;
Figure 10 is a partial side sectional view of the control valve assembly according to an example of the present disclosure with the locking member in the further unlocked position;
Figures 11A and 11B (collectively Figure 11) are end views of a locking portion of the control valve assembly according to an example of the present disclosure with Figure 11A showing the locking member in the locked position and Figure 11B showing the locking member in the unlocked position;
Figure 12 is a perspective view of the control valve assembly according to an example of the present disclosure without the actuator and with the locking member in the locked position;
Figure 13 is a perspective view of the control valve assembly according to an example of the present disclosure without the actuator and with the locking member inverted from the locking position in a tool mode of operation; and
Figure 14 is a flow chart depicting a method according to an example of the present disclosure.

### DETAILED DESCRIPTION OF EMBODIMENTS

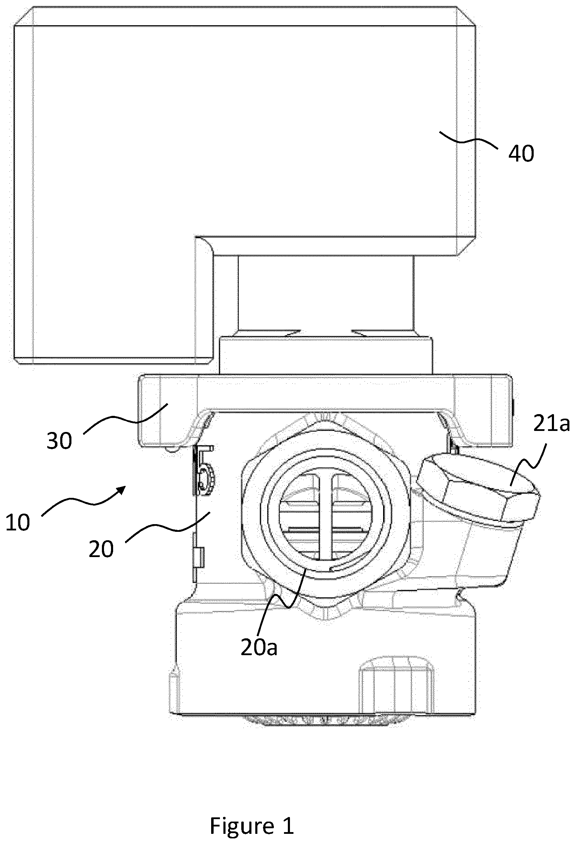

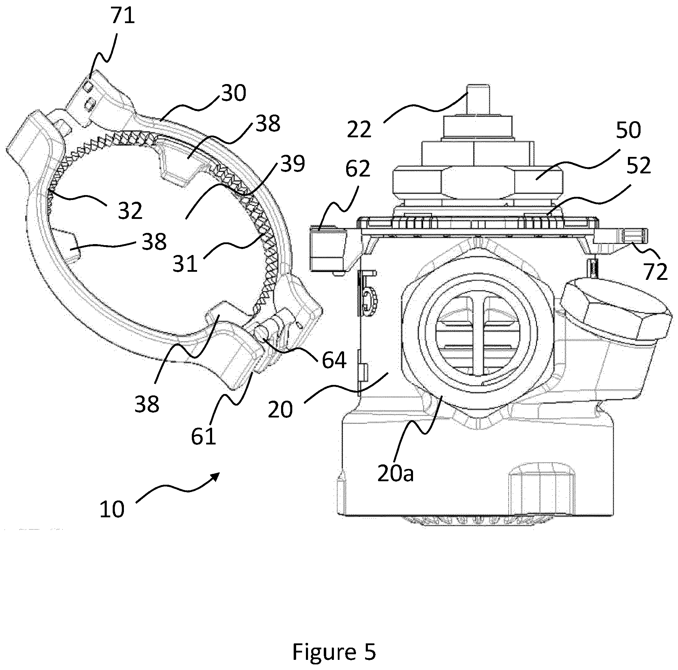

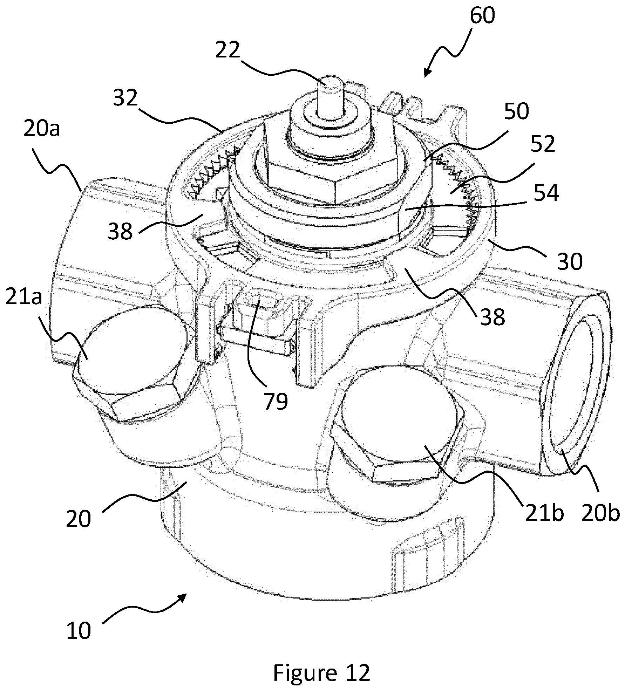

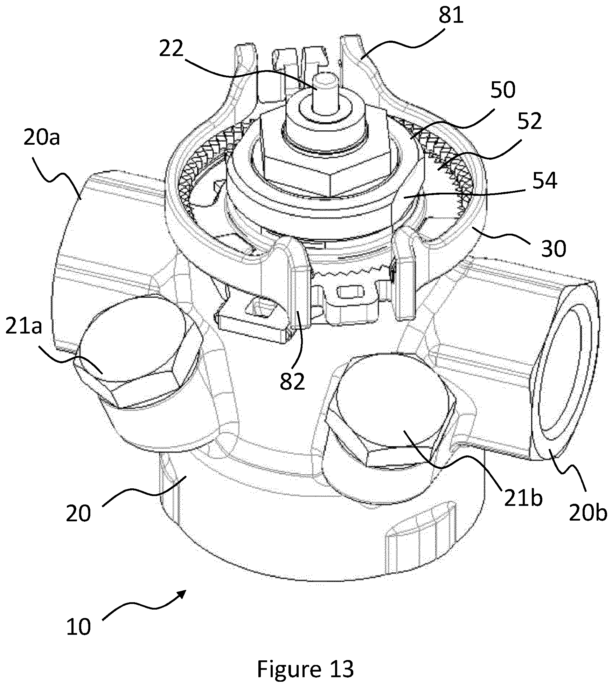

With reference to Figures 1 to 13, the present disclosure relates to a control valve assembly 10 comprising a control valve 20 and a locking member 30. The control valve 20 may be a pressure independent control valve, which as described above, may maintain a required flow rate through the valve independent of the upstream pressure. The details of such a control valve are disclosed for example in US 10,379,549 B2. In particular, as shown in Figures 12 and 13, the control valve 20 may comprise inlet and outlet flow ports 20, 20b with a valve provided therebetween. The control valve 20 may also comprise pressure testing ports 21a, 21b, which may be selectively opened and which may enable the pressure either side of the valve to be tested.

With particular reference to Figure 1, the control valve assembly 10 may further comprise an actuator 40, although it will be appreciated that the actuator may be provided separately from the control valve. The actuator 40 and control valve 20 may be coupled together, e.g. by virtue of threaded portions or a push fit. The control valve 20 may comprise an actuator adjuster 22 configured to allow the actuator 40 to interface with the control valve and adjust a flow rate through the control valve. The actuator adjuster 22 may be in the form of a pin or shaft that the actuator 40 may move linearly and/or rotatably to vary the flow rate through the control valve. The actuator 40 may receive instructions from a controller (not shown) in communication with the actuator.

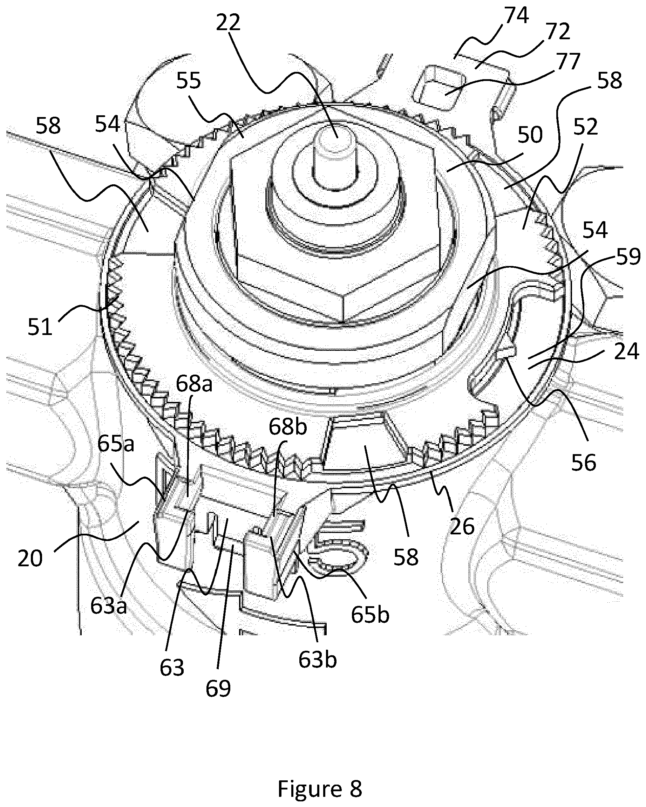

As best depicted in Figure 8, the control valve 20 further comprises a manual adjuster 50 configured to allow a user to pre-set a maximum flow value, such as the flow rate through the control valve. The manual adjuster 50 may comprise a dial 52, which may rotate to pre-set the flow value limit. The manual adjuster may extend around the actuator adjustor 22. The manual adjuster 50 is connected to valve components (not shown) within the control valve which adjust the maximum flow rate through the control valve. The actuator 40 may then control the flow rate through the control valve 20 up to the set maximum value.

The manual adjuster 50 may be rotated by hand or by using a tool. For example, a tool may engage one or more flat surfaces 54 of the manual adjuster 50. The flat surfaces 54 may be provided on a shaft portion 55 that is coupled to and spaced apart from (e.g. proud of) the dial 52. The shaft portion 55 may rotate with the dial 52. The manual adjustor 50 may also be rotated by using the locking member 30 as a tool as will be described in more detail below.

The manual adjuster 50 may comprise an indicator 56 that may move with the manual adjuster 50. The control valve 20 may comprise a surface 24 that is fixed and does not move with the manual adjustor 50. The surface 24 may comprise a scale of flow values and the indicator 56 may point to a value on the scale so that a user can determine the setting.

With particular reference to Figures 1, 2 and 12, the locking member 30 is configured to selectively limit or restrict user access to the manual adjuster 50 when the locking member 30 is in a locked position. The locking member 30 may substantially cover the manual adjuster 50 such that a user has limited access to the manual adjuster 50 and is therefore unable to adjust the manual adjuster 50. In particular, the locking member 30 may comprise a ring 32 that extends around the dial 52 of the manual adjuster 50.

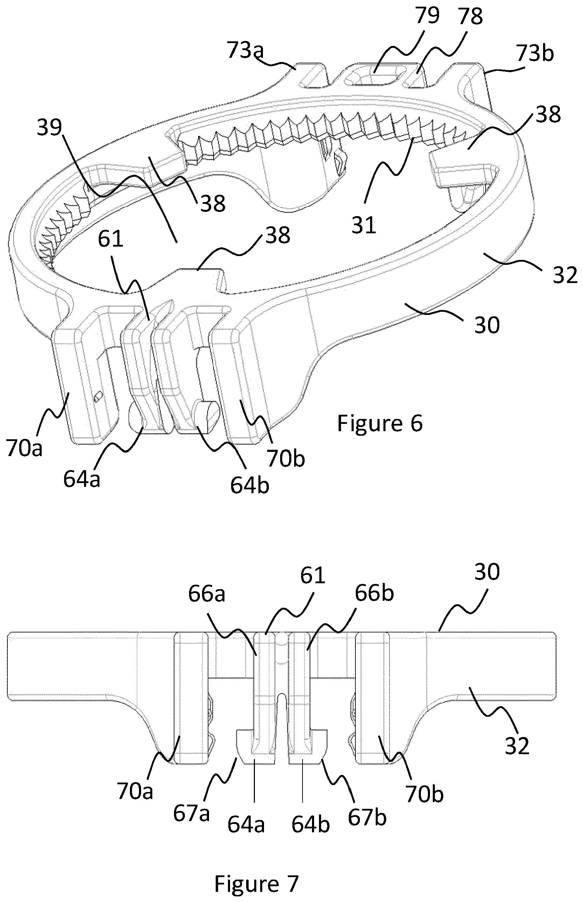

In addition to restricting access to the manual adjuster 50, the locking member 30 may lock the manual adjuster in place by virtue of a locking feature. In particular, as best shown in Figures 6 and 8, the locking member 30 may comprise a plurality of teeth 31 and the manual adjuster 50 may comprise a corresponding plurality of teeth 51. The manual adjuster teeth 51 may be circumferentially distributed about a radially outer edge of the dial 52. The locking member teeth 31 may be circumferentially distributed about a radially inner surface of ring 32. When the locking member 30 is in the locked position (e.g. as shown in Figures 1, 2 and 12), the locking member teeth 31 may lockingly engage the manual adjuster teeth 51, e.g. such that movement of the manual adjuster 50 is prevented.

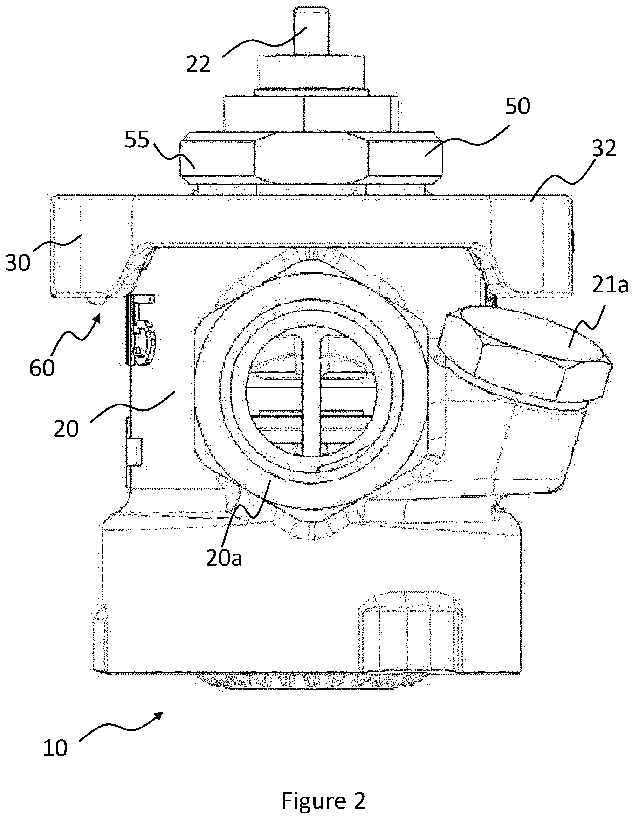

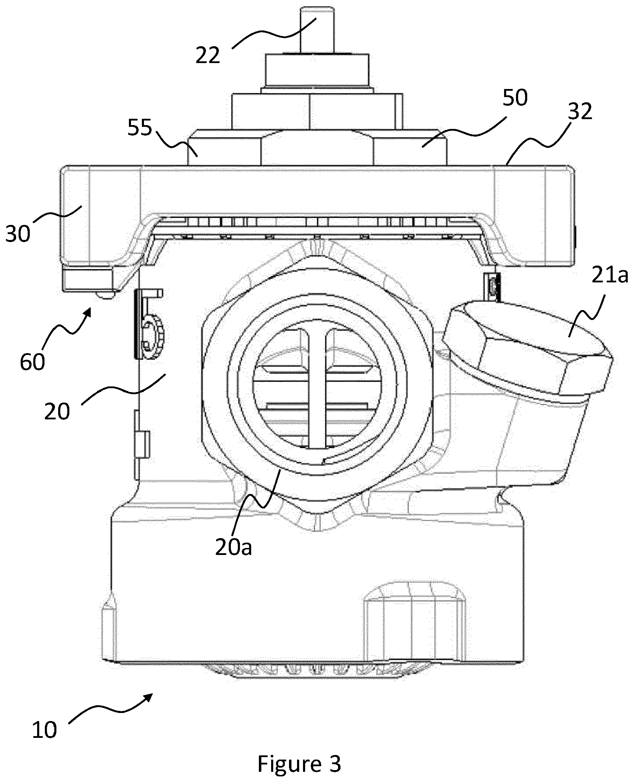

As shown in Figures 2 and 3, the locking member 30 may be located between (e.g. axially between) the manual adjuster 50 and the actuator adjuster 22. Furthermore, as shown in Figure 1, the locking member 30 may be configured such that the locking member may not be removed when the actuator 40 is in place. For example, in the case of the locking member 30 comprising ring 32, it may not be possible for the ring to pass over a standard actuator used with the control valve 20.

In addition, the locking member 30 comprises at least one tab 38 and, in the particular example shown, the locking member comprises three such tabs. The tabs 38 are distributed, e.g. equiangularly, about the circumference of the ring 32. The tabs 38 extend in a radially inward direction from the locking member ring 32. The tabs 38 are sized, e.g. have a radial length, so as to define an opening 39 that receives (and may be similar in size to) the shaft portion 55. The shaft portion 55 (and dial 52) may thus be free to rotate in opening 39 (e.g. when the locking member 30 is in the unlocked position as will be described below). However, the actuator 40 may engage the shaft portion 55 (or other portion of the control valve) and may thus be larger than the shaft portion 55. The opening 39 defined by the tabs 38 may therefore be smaller than a corresponding dimensions of the actuator 40. Accordingly, the locking member 30 may not be moved beyond a certain range when the actuator 40 is installed.

With particular reference to Figures 2 and 3, the locking member 30 is slidable, e.g. linearly, between an unlocked position (e.g. depicted in Figure 3) and the locked position (e.g. depicted in Figure 2). Such movement between the unlocked and locked positions may occur regardless of whether the actuator 40 is connected to the control valve 20. The manual adjuster teeth 51 may be engaged with the locking member teeth 31 when the locking member 30 is in the locked position. By contrast, the manual adjuster teeth 51 may be disengaged from the locking member teeth 31 when the locking member 30 is in the unlocked position. The locking member 30 and manual adjuster 50 are configured so that the manual adjuster 50 is adjustable in the unlocked position. In particular, the flat surfaces 54 of the manual adjustor may still be accessible to a tool when the locking member 30 is in the unlocked position.

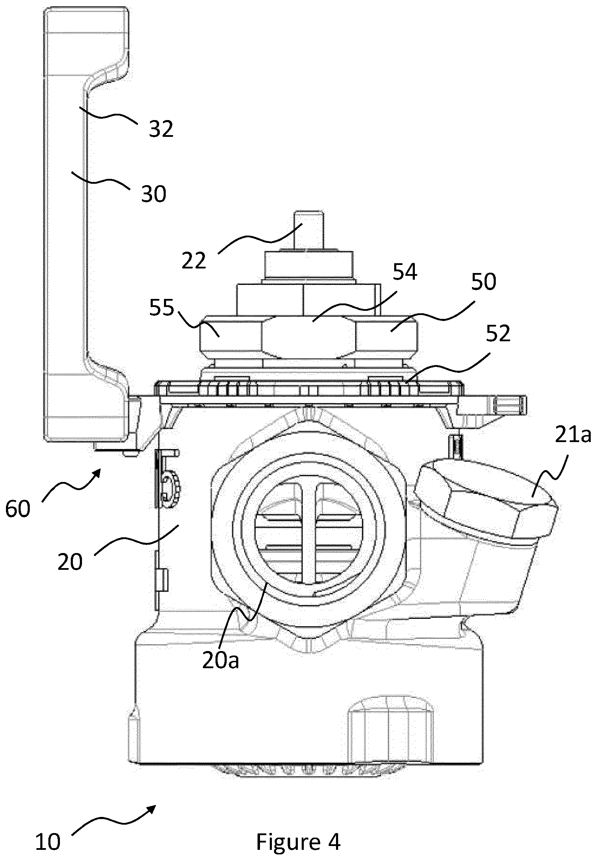

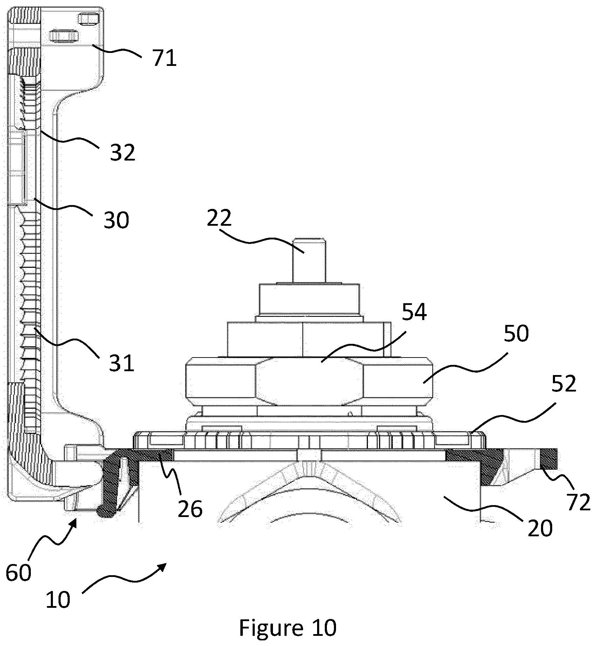

With particular reference to Figures 6 to 10, the locking member 30 may be rotatably coupled to the control valve 20 by virtue of a hinge assembly 60. The hinge assembly 60 may permit the locking member 30 to rotate between a first orientation, e.g. angle, (as depicted in Figures 2, 3 and 12) and a second orientation (as depicted in Figures 4 and 10) relative to the control valve 20. The locking member 30 may rotate through approximately 90 degrees between the first and second orientations.

The locking member 30 may be in either of the locked or unlocked positions when in the first orientation (e.g. as shown in Figures 2 and 3 respectively). The locking member 30 may be in a further unlocked position when the locking member is in the second orientation as the locking member 30 has rotated away from the manual adjuster 50. The locking member 30 may only move from the unlocked position to the further unlocked position when the actuator 40 is disconnected from the control valve 20 because as mentioned above, the locking member 30 may not pass over the actuator 40.

As shown in Figures 6 and 7, the locking member 30 may comprise a first hinge portion 61. As shown in Figure 8, the control valve 20 may comprise a second hinge portion 62. The first and second hinge portions 61, 62 may be rotatably coupled together so as to form the hinge assembly 60. In particular, the second hinge portion 62 may comprise at least one slot 63 and the first hinge portion 61 may comprise at least one pin 64 configured to rotate in a corresponding slot 63. The hinge assembly 60 may also be configured to permit the locking member 30 to slide, e.g. linearly, between the unlocked position and the locked position. To achieve this, the at least one pin 64 may also be configured to linearly slide in the corresponding slot 63.

The first hinge portion 61 may comprise a pair of pins 64a, 64b. The pins 64a, 64b may project in opposite directions and approximately tangentially with respect to the ring 32. The pins 64a, 64b may rotate and slide in a corresponding pair of slots 63a, 63b. The slots 63a, 63b may be provided either side of a channel formed from a pair of spaced apart walls 65a, 65b extending from the control valve 20 in the vicinity of the dial 52.

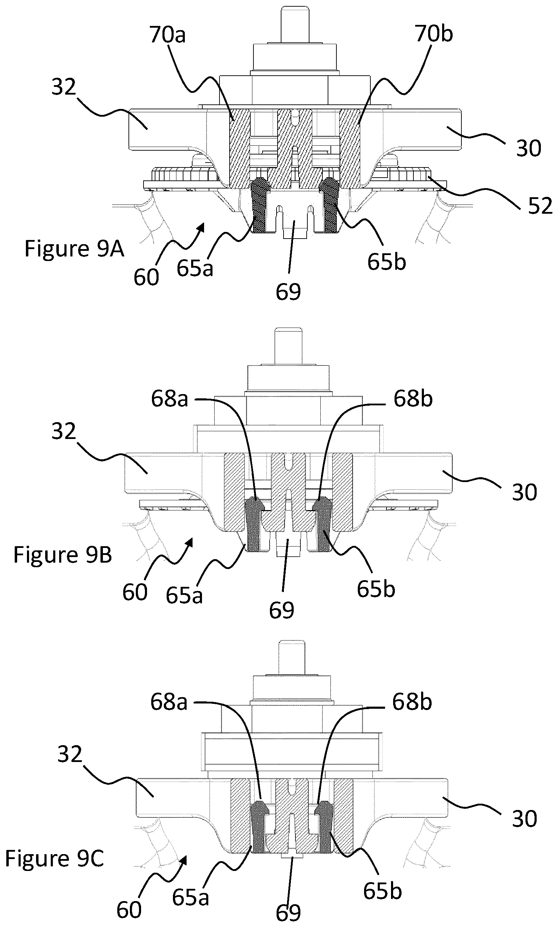

With reference to Figure 9, during assembly, the first and second hinge portions 61, 62 may be coupled together, e.g. by virtue of a snap fit. Figure 9A depicts the first and second hinge portions 61, 62 prior to being coupled together and Figure 9B depicts the first and second hinge portions 61, 62 after the snap fit has occurred. The first and second hinge portions 61, 62 may be coupled, e.g. snapped, together when the locking member 30 is in the first orientation.

To facilitate such a snap fit, the pins 64a, 64b may be resiliently deformable relative to one another. For example, first and second pins 64a, 64b may project from respective first and second fingers 66a, 66b, which are in turn connected to the ring 32. The first and second fingers 66a, 66b may be spaced apart such that there is a gap therebetween. The first and second fingers 66a, 66b may resiliently deform, e.g. bend, when a sufficient force is applied as the first and second hinge portions 61, 62 are brought together. The first and second pins 64a, 64b may comprise respective angled surfaces 67a, 67b, which may assist in causing the first and second fingers 66a, 66b to deform as the first and second hinge portions 61, 62 are snapped together. Additionally or alternatively, the walls 65a, 65b may comprise further angled surfaces 68a, 68b at one end (e.g. a top end) of respective slots 63a, 63b. The further angled surfaces 68a, 68b may also assist in causing the first and second fingers 66a, 66b to deform as the first and second hinge portions 61, 62 are snapped together.

As depicted in Figure 9A, the locking member 30 may be in the first orientation prior to engagement of the first and second hinge portions 61, 62. The locking member 30 may move towards the control valve 20, e.g. linearly, into the position depicted in Figure 9B as the first and second hinge portions 61, 62 are coupled together. Immediately after the first and second hinge portions are coupled together (as depicted in Figure 9B), the locking member 30 may be in the unlocked position. The locking member 30 may move further towards the control valve 20 and into the locked position depicted in Figure 9C.

A resiliently deformable portion, e.g. in the form of a tongue 69, may be provided at one end of the channel formed from the pair of spaced apart walls 65a, 65b. The tongue 69 may be provided at the end of the channel that receives the first and second pins 64a, 64b when the locking member 30 is in the locked position (e.g. at a bottom end or end opposite to that of the further angled surfaces 68a, 68b). The first and second pins 64a, 64b may not move further in the channel when the locking member 30 is in the first orientation and the locked position, e.g. because the control valve 20 blocks further movement. However, if the locking member 30 is in the second orientation, the first and second pins 64a, 64b with sufficient force may ride over a distal (e.g. enlarged or bulbous) end of the tongue 69 causing it to bend and permit the first and second pins 64a, 64b to leave the channel. In this way, the first and second hinge portions 61, 62 may be decoupled and the locking member 30 may be separated from the control valve 20. Figure 10 depicts the locking member 30 in the second orientation and prior to decoupling of the first and second hinge portions 61, 62.

In a reverse action, the first and second hinge portions 61, 62 may be coupled together when the locking member 30 is in the second orientation. The first and second hinge portions 61, 62 may snap fit together, for example by virtue of the first and second pins 64a, 64b riding over the distal (e.g. bulbous) end of the tongue 69 causing it to bend and permit the first and second pins 64a, 64b to enter the channel.

The slots 63a, 63b and pins 64a, 64b may comprise respective abutment surfaces that limit the travel (e.g. linear movement) of the pins in the slots. For example, the walls 65a, 65b may comprise an overhang that engages a corresponding overhang of the pins 64a, 64b, e.g. to limit travel of the locking member 30 away from the control valve 20. The bulbous end of the tongue 69 may form an abutment surface at the opposite end of the channel, which the pins 64a, 64b may engage. This engagement may limit travel of the locking member 30 towards the control valve 20, particularly when the locking member is in the second orientation (although the locking member may ride over the end of the tongue with enough force as described above).

The first and second hinge portions 61, 62 may form an interference fit such that a certain force is required to move the locking member 30 relative to the control valve 20. In particular, a further pair of locking member walls 70a, 70b may extend either side of the walls 65a, 65b of the control valve 20. The further pair of locking member walls 70a, 70b may contact and thus form an interference fit with respective walls 65a, 65b. This arrangement may help prevent unwanted movement of the locking ring 30 relative to the control valve 20, e.g. when in the unlocked position.

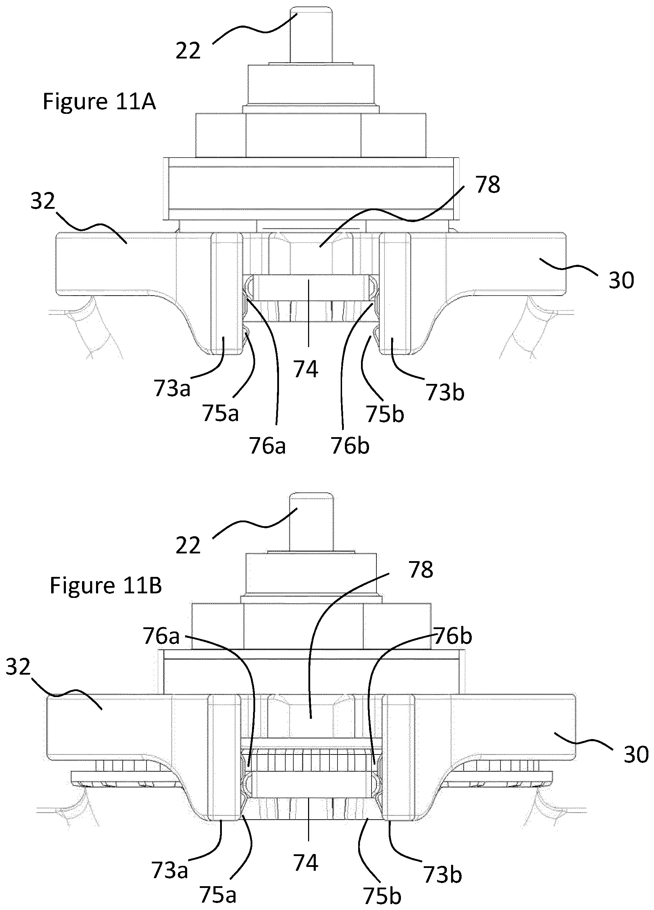

With reference to Figures 11 and 12, the locking member 30 may comprise a first engaging portion 71 that may selectively engage a second engaging portion 72 of the control valve 20. The first and second engaging portions 71, 72 may be provided opposite respective first and second hinge portions 61, 62. The first engaging portion 71 may comprise a pair of spaced apart engaging walls 73a, 73b, which may extend from the locking member ring 32. The second engaging portion 72 may comprise a projection 74, which may extend from the control valve 20 and may be straddled by engaging walls 73a, 73b. The projection 74 may fit between the engaging walls 73a, 73b, e.g. with an interference fit.

The first and second engaging portions 71, 72 may slide with respect to each other as the locking member moves between the unlocked position (depicted in Figure 11B) and the locked position (depicted in Figure 11A). However, the engaging walls 73a, 73b may comprise bump stops to resist relative movement of the first and second engaging portions 71, 72. For example, the engaging walls 73a, 73b may comprises respective first stops 75a, 75b, which the projection 74 may ride over as the locking member 30 moves between the locked and unlocked positions. The engaging walls 73a, 73b may also comprise respective second stops 76a, 76b, which the projection 74 may ride over as the locking member 30 moves away from the control valve 20 when in the unlocked position.

Referring in particular to Figures 8 and 12, the projection 74 may comprise an opening 77 and a projection 78 projecting from the locking member ring 32 may comprise a corresponding opening 79. The openings 77, 79 may align with one another when the hinge assembly 60 is coupled together and the locking ring 30 is in the locked position. A lock, e.g. fastener, cable tie or other locking device, may pass through the openings 77, 79 to maintain the locking ring 30 in the locked position and prevent access to the manual adjuster 50.

The first hinge potion 61 and/or first engaging portion 71 may extend from the ring 32 of the locking ring 30. The first hinge portion 61 and/or first engaging portion 71 may thus be unitary with the locking member ring 32. The locking member 30 may be formed from a plastics material and may for example be moulded. The second hinge portion 62 and/or second engaging portion 72 may extend from the control valve 20, in particular a ring 26 of the control valve that may be provided beneath the dial 52. The control valve ring 26 may provide the surface 24 with the scale of flow values. The second hinge portion 62 and/or second engaging portion 72 may thus be unitary with the control valve ring 26. The control valve ring 26 may be formed from a plastics material and may for example be moulded.

With reference to Figures 8 and 13, the manual adjuster 50 comprises at least one recess 58 corresponding to the at least one tab 38 of the locking member 30. In the example shown, the manual adjustor 50 comprises three recesses 58. The recesses 58 are distributed, e.g. equiangularly, about the circumference of the dial 52 and extend radially inward from the outer edge of the dial. The recesses 58 may be shaped and sized so as to correspond to the tabs 38 such that the locking member tabs 38 may engage the corresponding manual adjuster recesses 58. The tabs 38 may be spaced apart from (e.g. sit above) the dial 52 when the locking member 30 is in the locked or unlocked positions. However, the locking member 30 may be removed and inverted from the locking position such that the locking member tabs 38 may engage the recesses 58. In this way, the locking member 30 may be used as a tool for adjusting the manual adjuster 50.

Referring still to Figure 8, a further recess 59 may be provided in the dial 52. The further recess 59 may not be intended to receive one of the locking member tabs 38. Instead, the further recess 59 may comprise the indicator 56 and may reveal a portion of the surface 24 indicating the relevant flow values.

With particular reference to Figure 13, the locking member 30 may comprise at least one finger hold to assist in rotating the locking member 30 relative to the control valve 20. In the particular example shown, the locking member 30 comprises first and second finger holds 81, 82, which may be provided on an outer edge of the ring 32. The first and second finger holds 81, 82 may be opposite one another. The first hinge portion 61, which may protrude from the ring 32, may provide the first finger hold 81. The first engaging portion 71, which may also protrude from the ring 32, may provide the second finger hold 82.

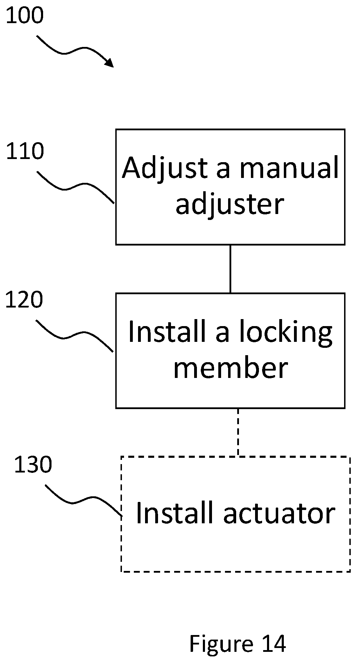

Referring now to Figure 14, the present disclosure also relates to a method 100 of installing or commissioning the control valve assembly 10 (e.g. after the control valve has been installed into surrounding pipework). The method comprises a first step 110 in which the manual adjuster 50 is adjusted to the appropriate setting for the desired maximum flow rate through the control valve. In a second step 120, the locking member 30 is installed to restrict user access to the manual adjuster 50. The locking member 30 may be moved into the locked position described above. In an optional third step 130, the actuator 40 may be installed onto the control valve 20.

The method may further comprise unlocking the locking member 30 by moving it from the locked position to the unlocked position. The method may comprise adjusting the manual adjuster 50 without removing the actuator 40 from the control valve 20. The locking member 30 may then be returned to the locked position. Alternatively, the actuator 40 may be removed and the locking member 30 may be moved into the further unlocked position, e.g. to permit greater access to the manual adjuster 50.
Variations to the disclosed embodiments can be understood and effected by those skilled in the art in practicing the principles and techniques described herein, from a study of the drawings, the disclosure and the appended claims. Any reference signs in the claims should not be construed as limiting the scope.

## Claims

1. A control valve assembly (10) comprising:
a control valve (20), the control valve (20) comprising:
a manual adjuster (50) configured to allow a user to pre-set a flow value limit for the control valve (20); and
an actuator adjuster (22) configured to allow an actuator (40) to interface with the control valve (20) and adjust the flow value;
wherein the control valve assembly (10) further comprises:
a locking member (30) configured to selectively restrict user access to the manual adjuster (50) when in a locked position, wherein the locking member (30) is slidable between an unlocked position and the locked position, adjustment of the manual adjuster (50) being permitted in the unlocked position,
**characterised in that**
the locking member (30) comprises at least one tab (38) and the manual adjuster (50) comprises at least one recess (58) corresponding to the at least one tab (38) of the locking member (30), such that when the locking member (30) is inverted from the locked position the locking member (30) is useable as a tool for adjusting the manual adjuster (50) with the at least one tab (38) of the locking member (30) engaging the corresponding at least one recess (58) of the manual adjuster (50).

2. The control valve assembly (10) of claim 1, wherein the locking member (30) is configured such that the locking member (30) cannot be removed when the actuator (40) is in place.

3. The control valve assembly (10) of claim 1 or 2, wherein the manual adjuster (50) comprises a plurality of teeth and the locking member (30) comprises a plurality of teeth configured to lockingly engage the plurality of teeth of the manual adjuster (50).

4. The control valve assembly (10) of any of the preceding claims, wherein the at least one tab (38) is configured to prevent the locking member (30) from being removed when the actuator (40) is installed.

5. The control valve assembly (10) of any of the preceding claims, wherein the locking member (30) is rotatably coupleable to the control valve (20) by virtue of a hinge assembly (60), the hinge assembly (60) permitting the locking member (30) to rotate between first and second orientations relative to the control valve (20).

6. The control valve assembly (10) of claim 5, wherein the hinge assembly (60) is configured to permit the locking member (30) to slide between the unlocked position and the locked position when the locking member (30) is in the first orientation.

7. The control valve assembly (10) of claim 5 or 6, wherein the hinge assembly (60) is configured such that in the second orientation, disassembly of the hinge assembly (60) is permitted such that the locking member (30) is detachable from the control valve (20).

8. The control valve assembly (10) of any of claims 5 to 7, wherein the locking member (30) comprises a first hinge portion (61, 62) and the control valve (20) comprises a second hinge portion (61, 62), the first and second hinge portions (61, 62) together forming the hinge assembly (60).

9. The control valve assembly (10) of claim 8, wherein at least one of the first and second hinge portions (61, 62) comprises a resiliently deformable portion such that the first and second hinge portions (61, 62) form a snap fit assembly.

10. The control valve assembly (10) of claim 8 or 9, wherein one of the first and second hinge portions (61, 62) comprises a slot (63, 63a, 63b) and the other of the first and second hinge portions (61, 62) comprises at least one pin (64, 64a, 64b) configured to linearly slide and rotate in the slot (63, 63a, 63b).

11. The control valve assembly (10) of any of claims 5 to 10, wherein the locking member (30) comprises a first engaging portion (71) and the control valve (20) comprises a second engaging portion (72), the first and second engaging portions being configured to selectively engage one another and being provided away from the hinge assembly (60).

12. Use of a locking member (30) for a control valve (20) to selectively restrict user access and as a tool for adjusting a manual adjuster of the control valve (20), the control valve (20) further comprising an actuator flow adjuster (22),
wherein the locking member (30) is configured to selectively restrict user access to the manual adjuster (50) when in a locked position, the locking member (30) being slidable between an unlocked position and the locked position, adjustment of the manual adjuster (50) being permitted in the unlocked position,
wherein the locking member (30) comprises at least one tab (38) corresponding to and configured to engage at least one recess (58) of the manual adjuster (50), such that when the locking member (30) is inverted from the locked position the locking member (30) is useable as a tool for adjusting the manual adjuster (50) with the at least one tab (38) of the locking member (30) engaging the corresponding at least one recess (58) of the manual adjuster (50).

13. A method (100) of commissioning a control valve assembly (10), the control valve assembly (10) comprising:
a control valve (20), the control valve (20) comprising:
a manual adjuster (50) configured to allow a user to pre-set a flow value limit for the control valve (20); and
an actuator adjuster (22) configured to allow an actuator (40) to interface with the control valve (20) and adjust the flow value; and
a locking member (30) configured to selectively restrict user access to the manual adjuster (50) when in a locked position, wherein the locking member (30) is slidable between an unlocked position and the locked position, adjustment of the manual adjuster (50) being permitted in the unlocked position, and wherein the locking member (30) comprises at least one tab (38) and the manual adjuster (50) comprises at least one recess (58) corresponding to the at least one tab (38) of the locking member (30),
wherein the method (100) comprises:
adjusting the manual adjuster (50) by inverting the locking member (30) from the locked position and using the locking member (30) as a tool to adjust the manual adjuster (50) with the at least one tab (38) of the locking member (30) engaging the corresponding at least one recess (58) of the manual adjuster (50); and
installing the locking member (30) to the locked position to restrict user access to the manual adjuster (50).

## Patentansprüche

1. Steuerungsventilbaugruppe (10), umfassend:
ein Steuerungsventil (20), das Steuerungsventil (20) umfassend:
eine manuelle Einstellvorrichtung (50), die dazu konfiguriert ist, einem Benutzer zu erlauben, eine Strömungswertgrenze für das Steuerungsventil (20) voreinzustellen; und
eine Aktuatoreinstellvorrichtung (22), die dazu konfiguriert ist, einem Aktuator (40) zu erlauben, sich mit dem Steuerungsventil (20) zu verbinden und den Strömungswert einzustellen,
wobei die Steuerungsventilbaugruppe (10) ferner Folgendes umfasst:
ein Verriegelungselement (30), das dazu konfiguriert ist, einen Benutzerzugriff auf die manuelle Einstellvorrichtung (50) selektiv zu beschränken, wenn es in einer verriegelten Position ist, wobei das Verriegelungselement (30) zwischen einer unverriegelten Position und der verriegelten Position verschiebbar ist, wobei eine Einstellung der manuellen Einstellvorrichtung (50) in der unverriegelten Position zugelassen wird,
**gekennzeichnet dadurch, dass**
das Verriegelungselement (30) mindestens eine Nase (38) umfasst und die manuelle Einstellvorrichtung (50) mindestens eine Aussparung (58) umfasst, die der mindestens einen Nase (38) des Verriegelungselements (30) entspricht, sodass, wenn das Verriegelungselement (30) aus der verriegelten Position umgestellt ist, das Verriegelungselement (30) als ein Werkzeug zum Einstellen der manuellen Einstellvorrichtung (50) verwendet werden kann, wobei die mindestens eine Nase (38) des Verriegelungselements (30) in die entsprechende mindestens eine Aussparung (58) der manuellen Einstellvorrichtung (50) eingreift.

2. Steuerungsventilbaugruppe (10) nach Anspruch 1, wobei das Verriegelungselement (30) so konfiguriert ist, dass das Verriegelungselement (30) nicht entfernt werden kann, wenn der Aktuator (40) an seinem Platz ist.

3. Steuerungsventilbaugruppe (10) nach Anspruch 1 oder 2, wobei die manuelle Einstellvorrichtung (50) eine Vielzahl von Zähnen umfasst und das Verriegelungselement (30) eine Vielzahl von Zähnen umfasst, die dazu konfiguriert sind, auf verriegelnde Weise in die Vielzahl von Zähnen der manuellen Einstellvorrichtung (50) einzugreifen.

4. Steuerungsventilbaugruppe (10) nach einem der vorhergehenden Ansprüche, wobei die mindestens eine Nase (38) dazu konfiguriert ist, zu verhindern, dass das Verriegelungselement (30) entfernt wird, wenn der Aktuator (40) installiert ist.

5. Steuerungsventilbaugruppe (10) nach einem der vorhergehenden Ansprüche, wobei das Verriegelungselement (30) mittels einer Scharnierbaugruppe (60) drehbar mit dem Steuerungsventil (20) gekoppelt werden kann, wobei die Scharnierbaugruppe (60) zulässt, dass das Verriegelungselement (30) sich zwischen einer ersten und einer zweiten Ausrichtung relativ zu dem Steuerungsventil (20) dreht.

6. Steuerungsventilbaugruppe (10) nach Anspruch 5, wobei die Scharnierbaugruppe (60) dazu konfiguriert ist, zuzulassen, dass sich das Verriegelungselement (30) zwischen der unverriegelten Position und der verriegelten Position verschiebt, wenn das Verriegelungselement (30) in der ersten Ausrichtung ist.

7. Steuerungsventilbaugruppe (10) nach Anspruch 5 oder 6, wobei die Scharnierbaugruppe (60) so konfiguriert ist, dass in der zweiten Ausrichtung eine Zerlegung der Scharnierbaugruppe (60) zugelassen wird, sodass das Verriegelungselement (30) von dem Steuerungsventil (20) abgenommen werden kann.

8. Steuerungsventilbaugruppe (10) nach einem der Ansprüche 5 bis 7, wobei das Verriegelungselement (30) einen ersten Scharnierabschnitt (61, 62) umfasst und das Steuerungsventil (20) einen zweiten Scharnierabschnitt (61, 62) umfasst, wobei der erste und der zweiten Scharnierabschnitt (61, 62) zusammen die Scharnierbaugruppe (60) ausbilden.

9. Steuerungsventilbaugruppe (10) nach Anspruch 8, wobei mindestens einer aus dem ersten und dem zweiten Scharnierabschnitt (61, 62) einen elastisch verformbaren Abschnitt umfasst, sodass der erste und der zweiten Scharnierabschnitt (61, 62) eine Schnappverschlussbaugruppe ausbilden.

10. Steuerungsventil (10) nach Anspruch 8 oder 9, wobei einer von dem ersten und dem zweiten Scharnierabschnitt (61, 62) einen Schlitz (63, 63a, 63b) umfasst und der andere von dem ersten und dem zweiten Scharnierabschnitt (61, 62) mindestens einen Stift (64, 64a, 64b) umfasst, der dazu konfiguriert ist, sich linear zu verschieben und sich in dem Schlitz (63, 63a, 63b) zu drehen.

11. Steuerungsventilbaugruppe (10) nach einem der Ansprüche 5 bis 10, wobei das Verriegelungselement (30) einen ersten Eingriffsabschnitt (71) umfasst und das Steuerungsventil (20) einen zweiten Eingriffsabschnitt (72) umfasst, wobei der erste und der zweiten Eingriffsabschnitt dazu konfiguriert sind, selektiv ineinander einzugreifen und abseits von der Scharnierbaugruppe (60) bereitgestellt sind.

12. Verwendung eines Verriegelungselements (30) für ein Steuerungsventil (20), um einen Benutzerzugriff selektiv zu beschränken und als ein Werkzeug zum Einstellen einer manuellen Einstellvorrichtung des Steuerungsventils (20), das Steuerungsventil (20) ferner umfassend eine Aktuatorströmungseinstellvorrichtung (22),
wobei das Verriegelungselement (30) dazu konfiguriert ist, einen Benutzerzugriff auf die manuelle Einstellvorrichtung (50) selektiv zu beschränken, wenn es in einer verriegelten Position ist, wobei das Verriegelungselement (30) zwischen einer unverriegelten Position und der verriegelten Position verschiebbar ist, wobei eine Einstellung der manuellen Einstellvorrichtung (50) in der unverriegelten Position zugelassen wird,
wobei das Verriegelungselement (30) mindestens eine Nase (38) umfasst, die mindestens einer Aussparung (58) der manuellen Einstellvorrichtung (50) entspricht und dazu konfiguriert ist, in diese einzugreifen, sodass, wenn das Verriegelungselement (30) aus der verriegelten Position umgestellt ist, das Verriegelungselement (30) als ein Werkzeug zum Einstellen der manuellen Einstellvorrichtung (50) verwendet werden kann, wobei die mindestens eine Nase (38) des Verriegelungselements (30) in die entsprechende mindestens eine Aussparung (58) der manuellen Einstellvorrichtung (50) eingreift.

13. Verfahren (100) zum Inbetriebnehmen einer Steuerungsventilbaugruppe (10), die Steuerungsventilbaugruppe (10) umfassend:
ein Steuerungsventil (20), das Steuerungsventil (20) umfassend:
eine manuelle Einstellvorrichtung (50), die dazu konfiguriert ist, einem Benutzer zu erlauben, eine Strömungswertgrenze für das Steuerungsventil (20) voreinzustellen; und
eine Aktuatoreinstellvorrichtung (22), die dazu konfiguriert ist, einem Aktuator (40) zu erlauben, sich mit dem Steuerungsventil (20) zu verbinden und den Strömungswert einzustellen; und
ein Verriegelungselement (30), das dazu konfiguriert ist, einen Benutzerzugriff auf die manuelle Einstellvorrichtung (50) selektiv zu beschränken, wenn es in einer verriegelten Position ist, wobei das Verriegelungselement (30) zwischen einer unverriegelten Position und der verriegelten Position verschiebbar ist, wobei eine Einstellung der manuellen Einstellvorrichtung (50) in der unverriegelten Position zugelassen wird, und wobei das Verriegelungselement (30) mindestens eine Nase (38) umfasst und die manuelle Einstellvorrichtung (50) mindestens eine Aussparung (58) umfasst, die der mindestens einen Nase (38) des Verriegelungselements (30) entspricht,
wobei das Verfahren (100) Folgendes umfasst:
Einstellen der manuellen Einstellvorrichtung (50) durch Umstellen des Verriegelungselements (30) von der verriegelten Position und Verwenden des Verriegelungselements (30) als ein Werkzeug, um die manuelle Einstellvorrichtung (50) einzustellen, wobei die mindestens eine Nase (38) des Verriegelungselements (30) in die entsprechende mindestens eine Aussparung (58) der manuellen Einstellvorrichtung (50) eingreift; und
Installieren des Verriegelungselements (30) in der verriegelten Position, um einen Benutzerzugriff auf die manuelle Einstellvorrichtung (50) zu beschränken.

## Revendications

1. Ensemble vanne de commande (10) comprenant :
une vanne de commande (20), la vanne de commande (20) comprenant :
un dispositif de réglage manuel (50) configuré pour permettre à un utilisateur de prédéfinir une limite de valeur d'écoulement pour la vanne de commande (20) ; et
un dispositif de réglage d'actionneur (22) configuré pour permettre à un actionneur (40) d'interagir avec la vanne de commande (20) et de régler la valeur d'écoulement ;
dans lequel l'ensemble vanne de commande (10) comprend en outre :
un élément de verrouillage (30) configuré pour restreindre sélectivement l'accès de l'utilisateur au dispositif de réglage manuel (50) lorsqu'il est dans une position verrouillée, dans lequel l'élément de verrouillage (30) peut coulisser entre une position déverrouillée et la position verrouillée, le réglage du dispositif de réglage manuel (50) étant permis dans la position déverrouillée,
**caractérisé en ce que**
l'élément de verrouillage (30) comprend au moins une languette (38) et le dispositif de réglage manuel (50) comprend au moins un évidement (58) correspondant à l'au moins une languette (38) de l'élément de verrouillage (30), de telle sorte que lorsque l'élément de verrouillage (30) est inversé à partir de la position verrouillée, l'élément de verrouillage (30) est utilisable comme outil pour régler le dispositif de réglage manuel (50) avec l'au moins une languette (38) de l'élément de verrouillage (30) se mettant en prise avec l'au moins un évidement (58) correspondant du dispositif de réglage manuel (50).

2. Ensemble vanne de commande (10) selon la revendication 1, dans lequel l'élément de verrouillage (30) est configuré de telle sorte que l'élément de verrouillage (30) ne peut pas être retiré lorsque l'actionneur (40) est en place.

3. Ensemble vanne de commande (10) selon la revendication 1 ou 2, dans lequel le dispositif de réglage manuel (50) comprend une pluralité de dents et l'élément de verrouillage (30) comprend une pluralité de dents configurées pour se mettre en prise par verrouillage avec la pluralité de dents du dispositif de réglage manuel (50).

4. Ensemble vanne de commande (10) selon l'une quelconque des revendications précédentes, dans lequel l'au moins une languette (38) est configurée pour empêcher l'élément de verrouillage (30) d'être retiré lorsque l'actionneur (40) est installé.

5. Ensemble vanne de commande (10) selon l'une quelconque des revendications précédentes, dans lequel l'élément de verrouillage (30) peut être couplé de manière rotative à la vanne de commande (20) au moyen d'un ensemble charnière (60), l'ensemble charnière (60) permettant à l'élément de verrouillage (30) de tourner entre des première et deuxième orientations par rapport à la vanne de commande (20).

6. Ensemble vanne de commande (10) selon la revendication 5, dans lequel l'ensemble charnière (60) est configuré pour permettre à l'élément de verrouillage (30) de coulisser entre la position déverrouillée et la position verrouillée lorsque l'élément de verrouillage (30) est dans la première orientation.

7. Ensemble vanne de commande (10) selon la revendication 5 ou 6, dans lequel l'ensemble charnière (60) est configuré de telle sorte que dans la deuxième orientation, le démontage de l'ensemble charnière (60) est permis de telle sorte que l'élément de verrouillage (30) est détachable de la vanne de commande (20).

8. Ensemble vanne de commande (10) selon l'une quelconque des revendications 5 à 7, dans lequel l'élément de verrouillage (30) comprend une première partie de charnière (61, 62) et la vanne de commande (20) comprend une deuxième partie de charnière (61, 62), les première et deuxième parties de charnière (61, 62) formant ensemble l'ensemble charnière (60).

9. Ensemble vanne de commande (10) selon la revendication 8, dans lequel au moins l'une des première et deuxième parties de charnière (61, 62) comprend une partie déformable de façon élastique de telle sorte que les première et deuxième parties de charnière (61, 62) forment un ensemble encliquetable.

10. Ensemble vanne de commande (10) selon la revendication 8 ou 9, dans lequel l'une des première et deuxième parties de charnière (61, 62) comprend une fente (63, 63a, 63b) et l'autre des première et deuxième parties de charnière (61, 62) comprend au moins un axe (64, 64a, 64b) configuré pour coulisser de manière linéaire et tourner dans la fente (63, 63a, 63b).

11. Ensemble vanne de commande (10) selon l'une quelconque des revendications 5 à 10, dans lequel l'élément de verrouillage (30) comprend une première partie de mise en prise (71) et la vanne de commande (20) comprend une deuxième partie de mise en prise (72), les première et deuxième parties de mise en prise étant configurées pour se mettre sélectivement en prise l'une avec l'autre et étant prévues à l'écart de l'ensemble charnière (60).

12. Utilisation d'un élément de verrouillage (30) pour une vanne de commande (20) pour restreindre sélectivement l'accès de l'utilisateur et comme outil pour régler un dispositif de réglage manuel de la vanne de commande (20), la vanne de commande (20) comprenant en outre un dispositif de réglage de débit d'actionneur (22),
dans laquelle l'élément de verrouillage (30) est configuré pour restreindre sélectivement l'accès de l'utilisateur au dispositif de réglage manuel (50) lorsqu'il est dans une position verrouillée, l'élément de verrouillage (30) pouvant coulisser entre une position déverrouillée et la position verrouillée, le réglage du dispositif de réglage manuel (50) étant permis dans la position déverrouillée,
dans laquelle l'élément de verrouillage (30) comprend au moins une languette (38) correspondant à et configurée pour se mettre en prise avec au moins un évidement (58) du dispositif de réglage manuel (50), de telle sorte que lorsque l'élément de verrouillage (30) est inversé à partir de la position verrouillée, l'élément de verrouillage (30) est utilisable comme outil pour régler le dispositif de réglage manuel (50) avec l'au moins une languette (38) de l'élément de verrouillage (30) se mettant en prise avec l'au moins un évidement (58) correspondant du dispositif de réglage manuel (50).

13. Procédé (100) de mise en service d'un ensemble vanne de commande (10), l'ensemble vanne de commande (10) comprenant :
une vanne de commande (20), la vanne de commande (20) comprenant :
un dispositif de réglage manuel (50) configuré pour permettre à un utilisateur de prédéfinir une limite de valeur d'écoulement pour la vanne de commande (20) ; et
un dispositif de réglage d'actionneur (22) configuré pour permettre à un actionneur (40) d'interagir avec la vanne de commande (20) et de régler la valeur d'écoulement ; et
un élément de verrouillage (30) configuré pour restreindre sélectivement l'accès de l'utilisateur au dispositif de réglage manuel (50) lorsqu'il est dans une position verrouillée, dans lequel l'élément de verrouillage (30) peut coulisser entre une position déverrouillée et la position verrouillée, le réglage du dispositif de réglage manuel (50) étant permis dans la position déverrouillée, et dans lequel l'élément de verrouillage (30) comprend au moins une languette (38) et le dispositif de réglage manuel (50) comprend au moins un évidement (58) correspondant à l'au moins une languette (38) de l'élément de verrouillage (30),
dans lequel le procédé (100) comprend :
le réglage du dispositif de réglage manuel (50) en inversant l'élément de verrouillage (30) à partir de la position verrouillée et en utilisant l'élément de verrouillage (30) comme outil pour régler le dispositif de réglage manuel (50) avec l'au moins une languette (38) de l'élément de verrouillage (30) se mettant en prise avec l'au moins un évidement (58) correspondant du dispositif de réglage manuel (50) ; et
l'installation de l'élément de verrouillage (30) dans la position verrouillée pour restreindre l'accès de l'utilisateur au dispositif de réglage manuel (50).
